# EUROPÄISCHE PATENTSCHRIFT

(11) **EP 1 849 345 B1**
(45) Veröffentlichungstag und Bekanntmachung des Hinweises auf die Patenterteilung: **17.06.2009**
(21) Anmeldenummer: 07008075.9
(22) Anmeldetag: 20.04.2007
(51) Int. Cl.: A01C 17/00

(54) **Vorrichtung zum Streuen körniger Stoffe**
Apparatus for spreading granular materials
Dispositif pour l'épandage de matières granuleuses

(30) Priorität: 26.04.2006 DE 102006019499
(43) Veröffentlichungstag der Anmeldung: 31.10.2007
(73) Patentinhaber: Amazonen-Werke H. Dreyer GmbH & Co. KG, 49205 Hasbergen (DE)
(72) Erfinder: Walter, Achim, 49078 Osnabrück (DE)

(56) Entgegenhaltungen:
- EP-A2- 1 086 616
- DE-A1- 3 722 507
- DE-A1- 10 219 210
- DE-C- 393 099

## Beschreibung

Die Erfindung betrifft eine Vorrichtung zum Streuen körniger Stoffe, gemäß des Oberbegriffes des Patentanspruches 1.

Die DE 102 19 210 A1 zeigt eine Vorrichtung gemäß des Oberbegriffes des Patentanspruches 1. Diese als gezogener Düngerstreuer ausgebildete Verteilmaschine weist einen geschlossenen Rahmen auf, in dem der trichterförmige Vorratsbehälter angeordnet ist.

Die EP 1 086 616 A2 zeigt einen Saatgutbehälter für ein Sägerät. In dem Saatgutbehälter sind trichterförmige Abschnitte einzusetzen.

Eine weitere Vorrichtung ist in der Praxis bekannt. Diese Vorrichtung ist als Schleuderdüngerstreuer ausgebildet und weist einen trichterförmigen Vorratsbehälter auf, an den sich Dosierorgane anschließen. Unterhalb der Dosierorgane ist jeweils ein rotierend angetriebenes Verteilorgan in Form einer Schleuderscheibe angeordnet. Außerhalb der Umlaufbahn der rotierenden Teile der Schleuderscheibe ist ein Schutzbügel angeordnet.

Der Erfindung liegt die Aufgabe zugrunde, die vorbeschriebene Vorrichtung in ihrer Ausgestaltung zu vereinfachen und kompakter auszugestalten.

Diese Aufgabe wird erfindungsgemäß durch die kennzeichnenden Merkmale des Patentanspruches 1 gelöst. Infolge dieser Maßnahmen ergibt sich ein tragfähiger Vorratsbehälter, der auch ein relativ großes Fassungsvermögen aufweisen kann. Darüber hinaus wird die Vorrichtung durch die verkleidenden Wandbereiche vorteilhaft verkleidet. Diesen Wandbereichen können durch entsprechende Ausgestaltung in vorteilhafter Weise noch weitere Aufgaben und Funktionen zugewiesen bekommen. Der Vorratsbehälter kann so in sicherer lasttragender Weise am Rahmen der Maschine befestigt werden. Somit stützt sich der Vorratsbehälter in sicherer Weise auf dem Rahmen ab. Es wird somit ein großes Fassungsvermögen des Vorratsbehälters in sicherer lasttragender Weise erreicht.

Eine vorteilhafte Anordnung des verkleidenden Wandbereiches und eine einfache Herstellung von Wandbereichen und Vorratsbehältern ergeben sich dadurch, dass der äußere verkleidende Wandbereich mit dem Vorratsbehälter verbunden ist.

Auch kann der äußere verkleidende Wandbereich an dem Vorratsbehälter und/oder dem Rahmen angeordnet sein.

Auch ist es möglich, dass der Vorratsbehälter und der äußere verkleidende Wandbereich einstückig ausgebildet sind.

Eine vorteilhafte Herstellung von Vorratsbehälter und dem äußeren verkleidenden Wandbereich lässt sich dadurch erreichen, dass der Vorratsbehälter und der äußere verkleidende Wandbereich einstückig aus Kunststoff hergestellt sind.

Um einen in einfacher Weise auf dem Rahmen Vorrichtung zu befestigenden Vorratsbehälter zu schaffen, ist vorgesehen, dass die Auslauftrichter mit dem zugeordneten Dosierorgan unabhängig vom Vorratsbehälter am Rahmen befestigt sind. Infolge dieser Maßnahme können die Auslauftrichter mit den zugeordneten Dosierorganen genau ausgerichtet zu den Verteilorganen am Rahmen angeordnet werden. Der Vorratsbehälter lässt sich dann unabhängig von dem Auslauftrichter am Rahmen oder dem Auslauftrichter selbst befestigen. Hierdurch wird eine unabhängige Anordnung des Vorratsbehälters von den Auslauftrichtern und den Dosierorganen zur Schaffung einer Vorrichtung zum Streuen körniger Stoffe geschaffen.

Eine weitere Befestigung des Vorratsbehälters wird dadurch erreicht, dass der Rahmen und die Auslauftrichter aus Metall und der Vorratsbehälter aus Kunststoff besteht. Hierdurch ergibt sich eine vorteilhafte Ausgestaltung des Streuers.

Um in einfacher Weise ein verlustfreies Übergeben des sich im Vorratsbehälter befindlichen Materials zu den Dosierorganen über die Auslauftrichter zu erreichen, ist vorgesehen, dass die unteren Enden des Vorratsbehälters in die Auslauftrichter überlappend einmündend angeordnet sind. Hierdurch wird weiterhin sichergestellt, dass durch unterschiedliche Last in dem Vorratsbehälter sich der Vorratsbehälter zu den Auslauftrichtern und dem Dosierorgan bewegen kann, ohne dass eine Relativbewegung zwischen Dosierorgan und Verteilorgan stattfindet.

Um sicher zu stellen, dass bei einer Relativbewegung zwischen Vorratsbehälter und Auslauftrichtern keine Relativbewegung zwischen Dosierorgan und Verteilorgan stattfindet, ist vorgesehen, dass die unteren Enden des Vorratsbehälters nicht mit den Auslauftrichtern verbunden sind.

Eine einfache Anordnung des Vorratsbehälters auf den Auslauftrichter lässt sich dadurch erreichen, dass die unteren Enden des Vorratsbehälters über eine Flanschverbindung mit den Auslauftrichtern verbunden sind.

Eine besonders vorteilhafte Ausgestaltung der Vorrichtung ergibt sich dadurch, dass der Rahmen und die Auslauftrichter aus Metall und der Vorratsbehälter aus Kunststoff bestehen. Infolge dieser Maßnahme ergibt sich die Möglichkeit für eine freie und einfache Ausgestaltung des Vorratsbehälters, hierdurch besteht die grundsätzliche Möglichkeit Auslauftrichter und Rahmen zueinander passend auszubilden und sie leicht montier- und demontierbar auszugestalten.

Eine vorteilhafte Aussteifung des Vorratsbehälters lässt sich dadurch erreichen, dass der Vorratsbehälter einen inneren trichterförmigen und die zu verteilenden Stoffe aufnehmenden und in die Auslauftrichter einmündenden Bereich und einen äußeren, teilweise den Rahmen verkleidenden und den Vorratsbehälter aussteifenden und verkleidenden Wandbereich aufweist. Hierdurch besteht die Möglichkeit, die Vorrichtung kompakt und verkleidet auszugestalten, so dass sich eine zweckmäßige Formgebung in einfacher Weise verwirklichen lässt.

In einfacher Weise lassen sich eine Warn- und Beleuchtungseinrichtung an der Vorrichtung dadurch anbringen, dass in dem äußeren, den Rahmen verkleidenden Wandbereich in integrierter Weise Warn- und Beleuchtungseinrichtungen angeordnet sind.

Eine vorteilhafte Ausgestaltung und Aussteifung des Vorratsbehälters lässt sich in einfacher Weise dadurch verwirklichen, dass der Vorratsbehälter jeweils mit seinen inneren und äußeren Wandbereichen zumindest in den seitlichen und den hinteren Bereichen im Längsschnitt einen nach unten offenen V- oder U-förmigen Querschnitt aufweist.

Eine sichere Auflagerung des Vorratsbehälters auf dem Rahmen lässt sich dadurch erreichen, dass der die inneren und die äußeren Wandbereiche verbindenden Wandteile des Vorratsbehälters als auf dem Rahmen aufliegende Flächen ausgebildet sind.

Eine sichere Funktionsweise der Dosierorgane und eine lange Lebensdauer der Auslauftrichter und der Dosierorgane lässt sich dadurch erreichen, dass zumindest die Auslauftrichter und die Dosierorgane aus nicht rostendem Material, wie nicht rostendem Stahl hergestellt sind.

Eine stabile Ausgestaltung des Rahmens und eine vorteilhafte Aufnahme des Vorratsbehälters lässt sich dadurch erreichen, dass der Rahmen eine in Fahrtrichtung der Vorrichtung verlaufende und den Vorratsbehälter in der Mitte abstützende Längstraverse aufweist, dass das dachförmige Mittelteil des Vorratsbehälters auf der Längstraverse aufliegt.

Aufgrund der Ausgestaltung des Vorratsbehälters aus Kunststoff und der Anordnung von verkleidenden Wänden an dem Vorratsbehälter lässt sich in einfacher Weise erreichen, dass in dem den äußeren, den Rahmen verkleidenden Wandbereichen in integrierter Weise leiterähnliche Aufstiegselemente angeordnet sind.

Aufgrund der Ausgestaltung des Vorratsbehälters aus Kunststoff und der Anordnung von den Vorratsbehälter verkleidenden Wänden, lässt sich in erfinderischer Weise in den den äußeren, den Rahmen verkleidenden Wandbereichen in integrierter Weise zumindest eine behälterliche Aufnahme zur Aufnahme von Zubehörteilen, Austauschteilen, etc. anordnen. Weiterhin lassen sich in vorteilhafter Weise in dem den äußeren den Rahmen verkleidenden Wandbreichen in integrierter Weise zumindest eine begehbare Plattform oder ein begehbares Element anordnen.

Auch kann in vorteilhafter Weise der äußere, den Rahmen verkleidende Wandbereich als die äußeren Umlaufbahnen der Verteilerelemente überragendes Schutzelement ausgebildet sein. Hierdurch ist es nicht erforderlich, noch separate Schutzelemente an der Vorrichtung anzubringen. Die Schutzelementen bildende Elemente können direkt in die Verkleidung integriert werden, bzw. kann die Verkleidung entsprechend so ausgebildet werden, dass sie als Schutzelement dient.

Auch können die den Rahmen verkleidenden Randbereiche in integrierter Weise auf der Vorderseite der Vorrichtung als Schmutzfänger dienende Wandelemente ausgebildet sein.

Auch können die zu den Beleuchtungseinrichtungen führenden Leitungen in integrierter Weise durch an den äußeren den Rahmen verkleidende Wandbereiche verlegt werden.

Weitere Einzelheiten der Erfindung sind den übrigen Unteransprüchen, der Beispielsbeschreibung und den Zeichnungen zu entnehmen. Hierbei zeigen
- Fig. 1: einen erfindungsgemäßen Schleuderstreuer in Seitenansicht und in Prinzipdarstellung,
- Fig. 2: den Schleuderdüngerstreuer in der Ansicht von hinten und in Prinzipdarstellung,
- Fig. 3: den Schleuderdüngerstreuer in der Ansicht III -III,
- Fig. 4: den Vorratsbehälter des Schleuderdüngerstreuers in Seitenansicht und in Prinzipdarstellung,
- Fig. 5: den Rahmen des Schleuderdüngerstreuers mit Auslauftrichter und Dosierorgan und Verteileinrichtung in Seitenansicht und in Prinzipdarstellung,
- Fig. 6: einen weiteren Schleuderdüngerstreuer in Seitenansicht und in Prinzipdarstellung,
- Fig. 7: den Schleuderstreuer gemäß Fig. 6 in der Ansicht von hinten und in Prinzipdarstellung,
- Fig. 8: einen weiteren Schleuderdüngerstreuer in Seitenansicht und in Prinzipdarstellung und
- Fig. 9: einen weiteren Schleuderdüngerstreuer in Seitenansicht und in Prinzipdarstellung.

Der Schleuderdüngerstreuer weist den Rahmen 1 und den Vorratsbehälter 2 mit den sich daran anschließenden Auslauftrichtern 3, deren unteren Enden 4 jeweils eine Dosiereinrichtung 5 zugeordnet ist, auf. Die Dosiereinrichtung 5 leitet das sich im Vorratsbehälter 2 befindliche Material in einstellbaren Mengen der unterhalb der Dosiereinrichtung 5 angeordneten und rotierend angetriebenen Verteileinrichtung 6, die als Schleuderscheibe 7 mit darauf angeordneten Wurfschaufeln 8 ausgebildet ist, zu.

Der Rahmen 1 weist einen vorderen Bereich 9 auf, an dem die Drei-Punkt-Kupplungselemente 10 zum Anbau an den Drei-Punkt-Kraftheber eines Ackerschleppers angeordnet sind. An der unteren Traverse 11 des Rahmens 1 ist die Verteileinrichtung 6 angeordnet. Der Rahmen 1 weist im oberen Bereich 12 einen umlaufenden Auflagebereich 13 auf. Der Auflagebereich 13 ist im wesentlichen horizontal ausgerichtet. Die den horizontalen Auflagebereich 13 bildende Rahmenteile 14 sind zusätzlich über schräg verlaufende Streben 15 gegenüber dem vorderen Rahmenteil 9 abgestützt. Weiterhin weist der Rahmen 1 in seiner Mitte ein in Fahrtrichtung 16 des Schleuderstreuers verlaufende und den Vorratsbehälter 2 in der Mitte abstützende Längstraverse 17 auf. Hierdurch ist das dachförmige Mittelteil 18 des Vorratsbehälters 2 auf der Längstraverse 17 aufliegend abgestützt.
Weiterhin sind an dem Rahmen 1 Tragelemente 19 angeordnet, an die die Auslauftrichter 3 mit dem jeweils zugeordneten Dosierorgan 5 unabhängig vom Vorratsbehälter 2 am Rahmen 1 befestigt sind.

Der Vorratsbehälter 2 weist in seinem oberen Bereich 20 mit dem Auflagebereich 13 des Rahmens 1 zusammenwirkende Abstützbereiche 14 auf. Der Abstützbereich 14 des Vorratsbehälters 2 liegt auf dem Auflagebereich 13 des Rahmens 1 auf. Die unteren Enden 21 des Vorratsbehälters 2 münden in die Auslauftrichter 3 in überlappender Weise ein. Die unteren Enden 21 des Vorratsbehälters 2 sind nicht mit den Auslauftrichtern 3 verbunden. Hierdurch kann der Vorratsbehälter 2 sich relativ zu den Auslauftrichtern 3 bewegen.

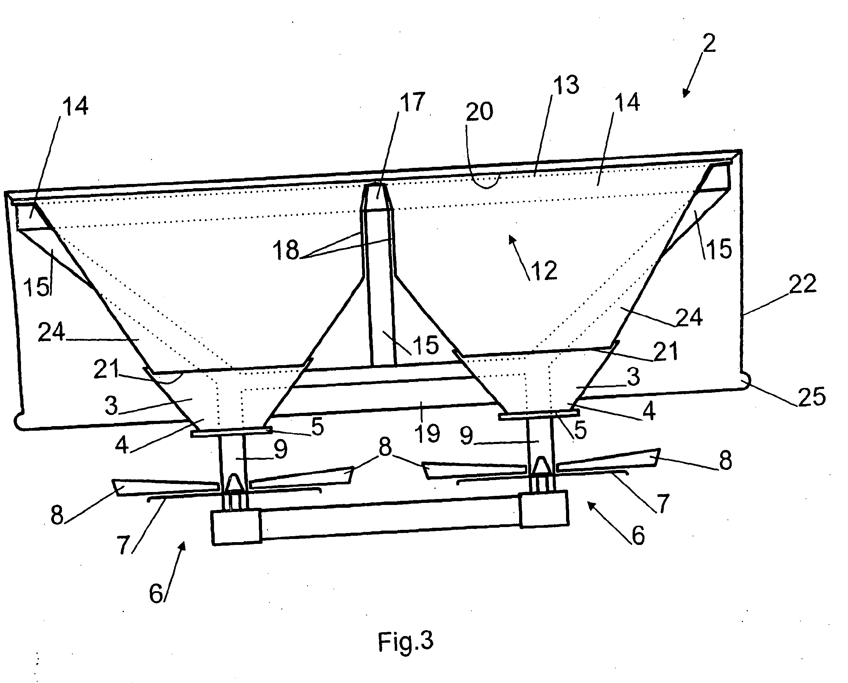

Der Vorratsbehälter 2 weist äußere den Vorratsbehälter 2 verkleidende Wandbereiche 22 auf. Somit besteht der Vorratsbehälter 2 aus einem inneren, trichterförmigen und die zu verteilenden Stoffe aufnehmenden und in die Auslauftrichter 3, die die Dosierorgane 5 tragen, einmündende Bereich 23 und einen äußeren, teilweise den Rahmen 1 verkleidenden und den Vorratsbehälter 2 aussteifenden und verkleidenden Wandbereiche 22 auf. Der äußere verkleidende Wandbereich 22 ist mit dem trichterförmigen Bereich 24 des Vorratsbehälters 2 einstückig ausgebildet und somit mit dem Vorratsbehälterbereich 24 verbunden. Der äußere verkleidende Wandbereich 22 und der Vorratsbehälterbereich 24 sind einstückig aus Kunststoff hergestellt, während die Auslauftrichter 3 und der Rahmen 1 aus Metall hergestellt sind. Der Vorratsbehälter 2 weist jeweils mit seinem inneren und äußeren Wandbereichen 22 zumindest in den seitlichen und dem unteren Bereich im Längsschnitt einen nach unten offene V- oder U-förmigen Querschnitt auf, wie insbesondere die Fig. 3 zeigt.

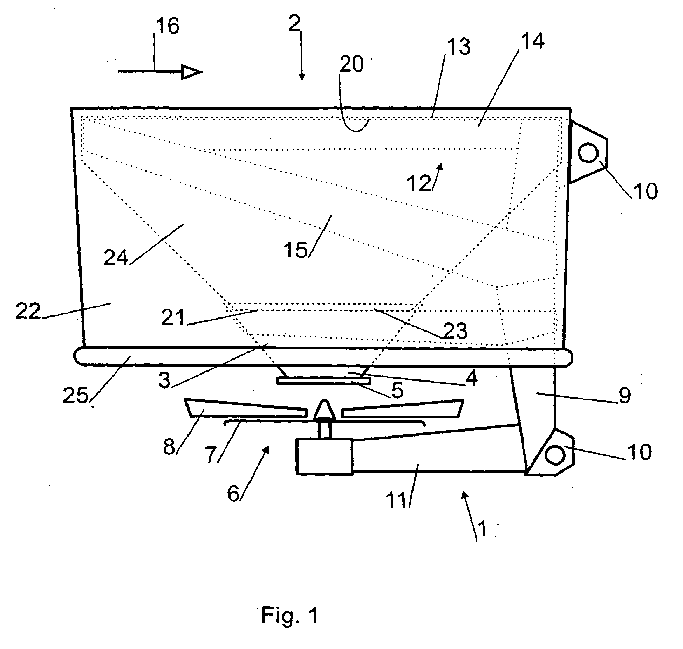

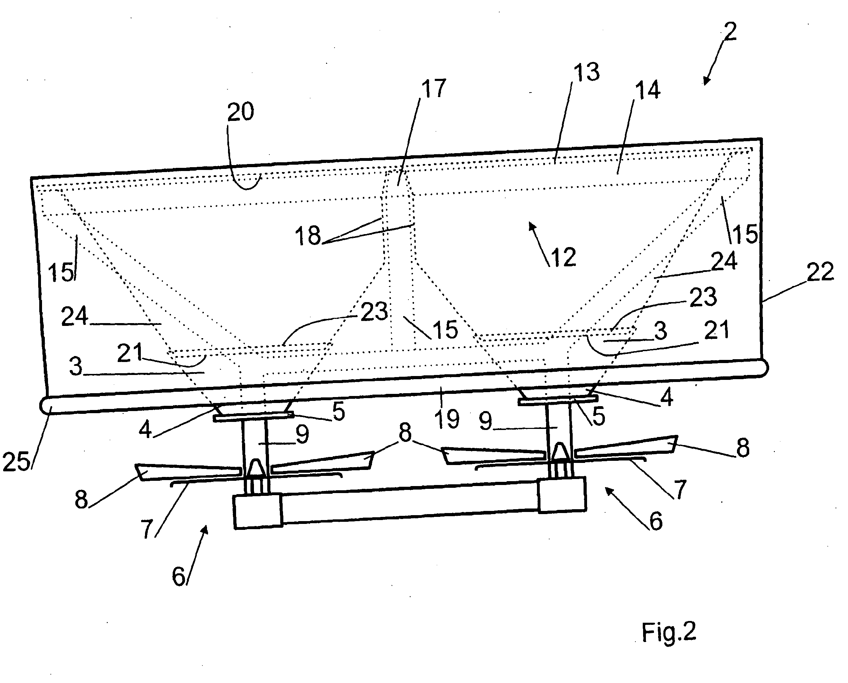

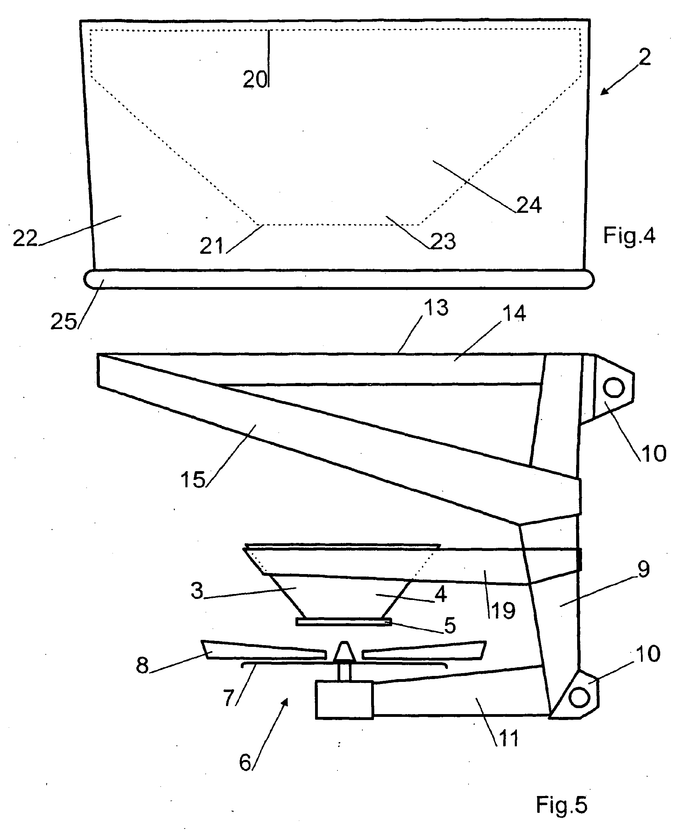

Wie die Fig. 1-5 zeigen bestehen der Rahmen 1 und der Vorratsbehälter 2 aus separaten Teilen, wobei der Vorratsbehälter 2 über den Rahmen 1 gemäß Fig. 5 gestülpt wird und so die unteren Enden 21 des trichterförmigen Bereiches 24 des Vorratsbehälters 2 in die am Rahmen 1 angeordneten Auslauftrichter 3 überlappend einmünden. Mit geeigneten Mitteln wird der Vorratsbehälter 2 an dem Rahmen 1 befestigt, dies kann beispielsweise mit nicht dargestellten Schrauben oder Clipsverbindungen oder anderen geeigneten Verbindungselementen geschehen.

Der äußere verkleidende Wandbereich 22 ist als die äußeren Umlaufbahnen der Verteilerelemente 8 überragendes Schutzelement 25 ausgebildet, wie die Fig. 1-3 zeigen. Somit erfüllt der den Vorratsbehälter 2 verkleidende Wandbereich 22 nicht nur seine Verkleidungsfunktion sondern auch eine Schutzfunktion, in dem quasi in den die verkleidenden Wandbereiche 22 bildenden Element das die Verteilerelemente 8 überragende Schutzelement 25 in integrierter Weise angeordnet ist.

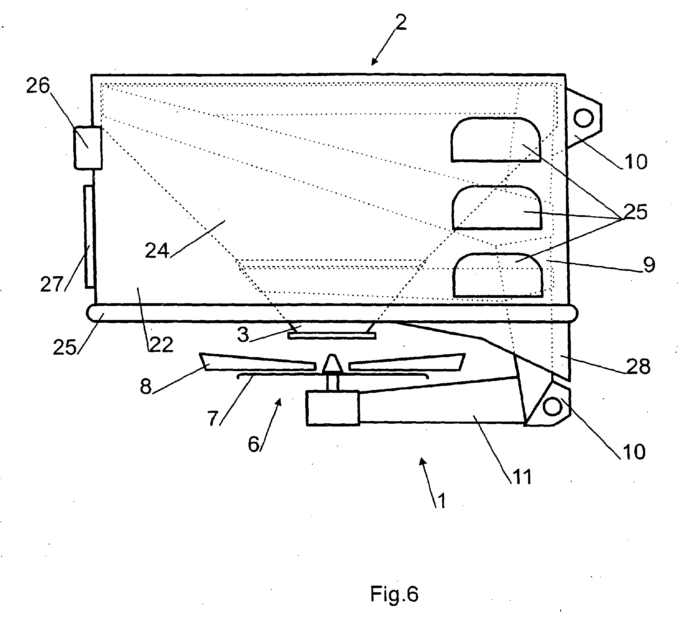

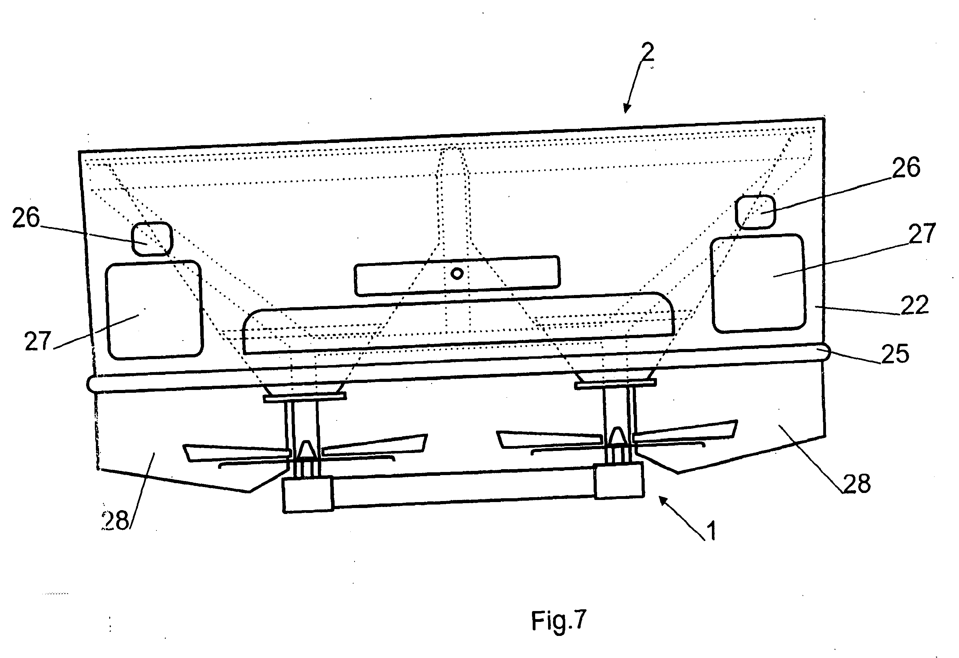

Der Schleuderdüngerstreuer gemäß den Fig. 6 und 7 unterscheidet sich von dem Schleuderdüngerstreuer gemäß den Fig. 1-5 dadurch, dass in dem den Vorratsbehälter 2 verkleidenden Wandelemente 22 in integrierter Weise auf der Seite leiterähnliche Aufstiegselemente 25 angeordnet sind. Des weiteren sind auf der Rückseite in den, den Vorratsbehälter 2 verkleidenden Wandelementen 22 in integrierter Weise Beleuchtungseinrichtungen 26 und Warntafeln 27 angeordnet. Die zu den Beleuchtungseinrichtungen 26 führenden Leitungen sind in nicht dargestellter Weise in integrierter Weise an den äußeren verkleidenden Wandbereichen 22 in verdeckter Weise verlegt.

Weiterhin sind den den Rahmen 1 verkleidenden äußeren Wandbereichen 22 auf der:Vorderseite des Schleuderdüngerstreuers in integrierter Weise als Schmutzfänger 28 dienende Wandelemente angeordnet.

Weiterhin können in nicht dargestellter Weise in den den äußeren, den Rahmen 1 verkleidenden Wandbereichen 22 in integrierter Weise zumindest eine behälterähnliche Aufnahme zur Aufnahme von Zubehörteilen, Austauschteilen, etc. angeordnet sein. Eine derartige behälterliche Aufnahme ist in nicht dargestellter Weise mit einer Abdeckung verschließbar. Weiterhin ist der Boden einer derartigen behälterähnlichen Aufnahme schräg nach innen abfallend angeordnet.

Weiterhin können in nicht dargestellter Weise in dem äußeren, den Rahmen 1 verkleidenden Wandbereichen 22 in integrierter Weise zumindest eine begehbare Plattform oder ein begehbares Element ähnlich den leiterähnlichen Aufstiegsöffnungen 25 angeordnet sein. Auch kann eine derartig begehbare Plattform die den Behälter 2 verkleidenden Elemente 22 nach außen überragen.

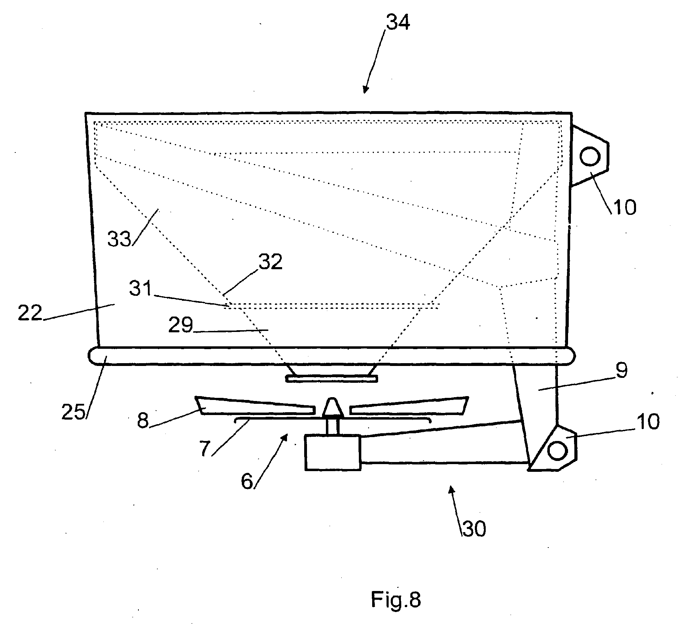

Der Schleuderdüngerstreuer gemäß Fig. 8 unterscheidet sich von dem Schleuderdüngerstreuer gemäß den Fig. 1- 7 dadurch, dass die Auslauftrichter 29 nicht als separate Elemente am Rahmen 30 angeordnet sind, sondern mittels Flanschelementen 31 an den unteren Enden 32 der trichterförmigen Bereiche 33 des Vorratsbehälters 34 angeflanscht sind. Hierbei bestehen auch wiederum die Teile des Vorratsbehälters 34 aus Kunststoff, während der Rahmen 30 und die Auslauftrichter 29 aus Metall bestehen.

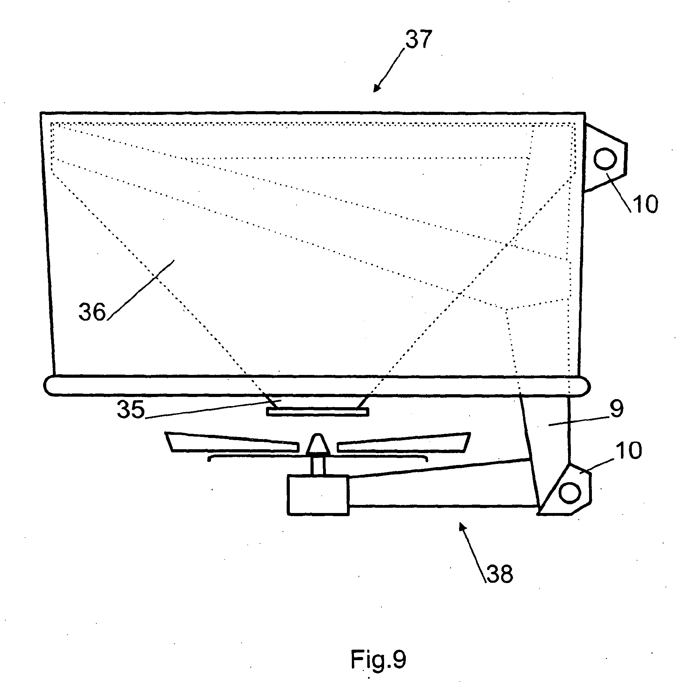

Der Schleuderdüngerstreuer gemäß Fig. 9 unterscheidet sich von dem Schleuderdüngerstreuer gemäß den Fig. 1-5 dadurch, dass die Auslauftrichter 35 in integrierter Weise Bestandteil der trichterförmigen Bereiche 36 des Vorratsbehälters 37 sind und mit diesem einstückig verbunden sind. In diesem Falle sind die Auslauftrichter 35 ebenso wie der Vorratsbehälter 37 aus Kunststoff hergestellt, während die Rahmenteile 38 aus Metall bestehen.

## Patentansprüche

1. Vorrichtung zum Streuen körniger Stoffe, insbesondere Düngemittel, die einen lasttragenden Rahmen, einen vom Rahmen getragenen trichterförmigen Vorratsbehälter sowie sich an dem Vorratsbehälter anschließenden Dosierorgane, die die sich im Vorratsbehälter befindlichen Stoffe unterhalb des Dosierorgans angeordneten angetriebenen Verteilorganen in einstellbaren Mengen zuleiten, aufweist, wobei der Vorratsbehälter (2) einen inneren trichterförmigen und die zu verteilenden Stoffe aufnehmenden und in die Auslauftrichter (3) und/oder Dosierorgane (5) einmündenden Bereich (4) und einen äußeren, teilweise den Rahmen (1) verkleidenden und den Vorratsbehälter (2, 24) aussteifenden und verkleidenden Wandbereich (22) aufweist, **dadurch gekennzeichnet, dass** der Rahmen (1) einen umlaufenden Auflagebereich (13) aufweist, dass der Vorratsbehälter (2) einen mit dem Auflagebereich (13) des Rahmens (1, 14) zusammenwirkenden Abstützbereich (20) aufweist, das der Abstützbereich (20) des Vorratsbehälters (2, 24) auf dem Auflagebereich (13) des Rahmens (1, 14) aufliegt.

2. Vorrichtung nach Anspruch 1, **dadurch gekennzeichnet, dass** der äußere verkleidende Wandbereich (22) mit dem Vorratsbehälter (2, 24) verbunden ist.

3. Vorratsbehälter nach Anspruch 1, **dadurch gekennzeichnet, dass** der äußere verkleidende Wandbereich (22) an dem Vorratsbehälter (2, 24) und/oder Rahmen (1) angeordnet ist.

4. Vorratsbehälter nach Anspruch 1, **dadurch gekennzeichnet, dass** der Vorratsbehälter (2, 24) und der äußere verkleidende Wandbereich (22) einstückig ausgebildet sind.

5. Vorrichtung nach einem oder mehreren der vorstehenden Ansprüche, **dadurch gekennzeichnet, dass** der Vorratsbehälter (2, 24) und der äußere verkleidende Wandbereich (22) einstückig aus Kunststoff hergestellt sind.

6. Vorrichtung nach Anspruch 1, **dadurch gekennzeichnet, dass** die Auslauftrichter (3) mit dem zugeordneten Dosierorgan (5) unabhängig vom Vorratsbehälter (2, 24) am Rahmen befestigt sind.

7. Vorrichtung nach Anspruch 6, **dadurch gekennzeichnet, dass** die unteren Enden (23) des Vorratsbehälters (2, 24) in die Auslauftrichter (3) überlappend einmündend angeordnet sind.

8. Vorrichtung nach Anspruch 7, **dadurch gekennzeichnet, dass** die unteren Enden (23) des Vorratsbehälters (2, 24) nicht mit den Auslauftrichtern (3) verbunden sind.

9. Vorrichtung nach Anspruch 1, **dadurch gekennzeichnet, dass** die unteren Enden (32) des Vorratsbehälters (33, 34) über eine Flanschverbindung (31) mit den Auslauftrichtern (29) verbunden sind.

10. Vorrichtung nach einem oder mehreren der vorstehenden Ansprüche, **dadurch gekennzeichnet, dass** der Rahmen (1, 30) und die Auslauftrichter (3, 29) aus Metall und der Vorratsbehälter (2, 24, 33, 34) aus Kunststoff bestehen.

11. Vorrichtung nach einem oder mehreren der vorstehenden Ansprüche, **dadurch gekennzeichnet, dass** in dem äußeren, den Rahmen (1, 9, 11) verkleidenden Wandbereich (22) in integrierter Weise Warn- und Beleuchtungseinrichtungen (26, 27) angeordnet sind.

12. Vorrichtung nach einem oder mehreren der vorstehenden Ansprüche, **dadurch gekennzeichnet, dass** der Vorratsbehälter (2) jeweils mit seinen inneren (24) und äußeren Wandbereichen (22) zumindest in den seitlichen und den hinteren Bereichen im Längsschnitt eine nach unten offenen V- oder U-förmigen Querschnitt aufweist.

13. Vorrichtung nach einem oder mehreren der vorstehenden Ansprüche, **dadurch gekennzeichnet, dass** der die inneren (24) und die äußeren Wandbereiche (22) verbindenden Wandteile des Vorratsbehälters (2) als auf dem Rahmen (1, 14) aufliegende Flächen (20) ausgebildet sind.

14. Vorrichtung nach Anspruch 10, **dadurch gekennzeichnet, dass** die auf dem Rahmen (1, 14) aufliegende Fläche (20) horizontal ausgebildet ist.

15. Vorrichtung nach einem oder mehreren der vorstehenden Ansprüche, **dadurch gekennzeichnet, dass** zumindest die Auslauftrichter (3) und die Dosierorgane (5) aus nichtrostendem Material, wie nichtrostendem Stahl hergestellt sind.

16. Vorrichtung nach einem oder mehreren der vorstehenden Ansprüche, **dadurch gekennzeichnet, dass** der Rahmen (1) eine in Fahrtrichtung (16) der Vorrichtung verlaufende und den Vorratsbehälter (2, 24) in der Mitte abstützende Längstraverse (17) aufweist, dass das dachförmige Mittelteil (18) des Vorratsbehälters (2, 24) auf der Längstraverse (17) aufliegt.

17. Vorrichtung nach einem oder mehreren der vorstehenden Ansprüche, **dadurch gekennzeichnet, dass** die Auslauftrichter (3) jeweils über zumindest zwei parallel zu den Trichterwänden des Vorratsbehälters (2) verlaufende Streben (19) am Rahmen (1) aufgehängt sind.

18. Vorrichtung nach einem oder mehreren der vorstehenden Ansprüche, **dadurch gekennzeichnet, dass** in dem den äußeren, den Rahmen (1) verkleidenden Wandbereichen (22) in integrierter Weise leiterähnliche Aufstiegselemente (25) angeordnet sind.

19. Vorrichtung nach einem oder mehreren der vorstehenden Ansprüche, **dadurch gekennzeichnet, dass** in dem den äußeren, den Rahmen (1) verkleidenden Wandbereichen (22) in integrierter Weise zumindest eine behälterähnliche Aufnahme zur Aufnahme von Zubehörteilen, Austauschteilen etc. angeordnet ist.

20. Vorrichtung nach Anspruch 19, **dadurch gekennzeichnet, dass** die behälterähnliche Aufnahme mit einer Abdeckung verschließbar ist.

21. Vorrichtung nach Anspruch 19, **dadurch gekennzeichnet, dass** der Boden der behälterähnlichen Aufnahme schräg nach innenunten abfallend angeordnet ist.

22. Vorrichtung nach einem oder mehreren der vorstehenden Ansprüche, **dadurch gekennzeichnet, dass** in dem den äußeren, den Rahmen (1) verkleidenden Wandbereichen (22) in integrierter Weise zumindest eine begehbare Plattform oder begehbares Element angeordnet ist.

23. Vorrichtung nach einem oder mehreren der vorstehenden Ansprüche, **dadurch gekennzeichnet, dass** der äußere, den Rahmen (1) verkleidende Wandbereich (22) als die äußeren Umlaufbahnen der Verteilerelemente (6, 7, 8) überragendes Schutzelement (25) ausgebildet ist.

24. Vorrichtung nach einem oder mehreren der vorstehenden Ansprüche, **dadurch gekennzeichnet, dass** in dem den äußeren, den Rahmen (1) verkleidenden Wandbereichen (22) in integrierter Weise auf der Vorderseite der Vorrichtung als Schmutzfänger (28) dienende Wandelemente angeordnet sind.

25. Vorrichtung nach einem oder mehreren der vorstehenden Ansprüche, **dadurch gekennzeichnet, dass** die zu den Beleuchtungseinrichtungen (26) führenden Leitungen in integrierter Weise durch an den äußeren den Rahmen verkleidenden Wandbereichen (22) verlegbar sind.

## Claims

1. Device for spreading granular material, more especially fertiliser material, said device including a load-bearing frame, a funnel-shaped hopper that is supported by the frame and metering members, which connect to the hopper and supply the material located in the hopper in adjustable quantities to driven distributing members that are disposed underneath the metering member, wherein the hopper (2) has an inner funnel-shaped region (4), which accommodates the material to be distributed and opens out into the outlet funnel (3) and/or metering members (5), and an outer wall region (22), which partially clads the frame (1) and reinforces and clads the hopper (2, 24), **characterized in that** the frame (1) includes a circumferential contact region (13), **in that** the hopper (2) includes a support region (13) that interacts with the contact region (13) of the frame (1, 14) and **in that** the support region (20) of the hopper (2, 24) is supported on the contact region (13) of the frame (1, 14).

2. Device according to Claim 1, **characterized in that** the outer cladding wall region (22) is connected to the hopper (2, 24).

3. Hopper according to Claim 1, **characterized in that** the outer cladding wall region (22) is positioned at the hopper (2, 24) and/or frame (1).

4. Hopper according to Claim 1, **characterized in that** the hopper (2, 24) and the outer cladding wall region (22) are realized in one piece.

5. Device according to one or more of the preceding claims, **characterized in that** the hopper (2, 24) and the outer cladding wall region (22) are produced in one piece from plastics material.

6. Device according to Claim 1, **characterized in that** the outlet funnel (3) and the associated metering member (5) are secured on the frame independently of the hopper (2, 24).

7. Device according to Claim 6, **characterized in that** the bottom ends (23) of the hopper (2, 24) are positioned so as to open out in an overlapping manner into the outlet funnels (3).

8. Device according to Claim 7, **characterized in that** the bottom ends (23) of the hopper (2, 24) are not connected to the outlet funnels (3).

9. Device according to Claim 1, **characterized in that** the bottom ends (32) of the hopper (33, 34) are connected to the outlet funnels (29) by means of a flange connection (31).

10. Device according to one or more of the preceding claims, **characterized in that** the frame (1, 30) and the outlet funnels (3, 29) are produced from metal and the hopper (2, 24, 33, 34) is produced from plastics material.

11. Device according to one or more of the preceding claims, **characterized in that** warning and lighting devices (26, 27) are positioned in an integrated manner in the outer wall region (22) that clads the frame (1, 9, 11).

12. Device according to one or more of the preceding claims, **characterized in that** each hopper (2), in longitudinal section, has a downwardly open V-shaped or U-shaped cross-section with its inner (24) and outer wall regions (22) at least in the lateral and the rear regions.

13. Device according to one or more of the preceding claims, **characterized in that** the wall parts of the hopper (2) connecting the inner (24) and the outer wall regions (22) are realized in the form of faces (20) that are supported on the frame (1, 14).

14. Device according to Claim 10, **characterized in that** the face (20) supported on the frame (1, 14) is horizontal.

15. Device according to one or more of the preceding claims, **characterized in that** at least the outlet funnels (3) and the metering members (5) are produced from non-corroding material, such as non-corroding steel.

16. Device according to one or more of the preceding claims, **characterized in that** the frame (1) includes a longitudinal cross-beam (17), which extends in the direction of travel (16) of the device and supports the hopper (2, 24) in the centre, and **in that** the roof-shaped central portion (18) of the hopper (2, 24) is supported on the longitudinal cross-beam (17).

17. Device according to one or more of the preceding claims, **characterized in that** the outlet funnels (3) are each suspended on the frame (1) by means of at least two struts (19) that extend parallel to the funnel walls of the hopper (2).

18. Device according to one or more of the preceding claims, **characterized in that** ladder-like ascent members (25) are positioned in an integrated manner in the outer wall regions (22) cladding the frame (1).

19. Device according to one or more of the preceding claims, **characterized in that** at least one container-like accommodating means for accommodating accessories, spare parts etc is positioned in an integrated manner in the outer wall regions (22) cladding the frame (1).

20. Device according to Claim 19, **characterized in that** the container-like accommodating means is closable by means of a cover.

21. Device according to Claim 19, **characterized in that** the floor of the container-like accommodating means is disposed so as to slope away downwards and inwards in an inclined manner.

22. Device according to one or more of the preceding claims, **characterized in that** at least one platform that can be walked on or member that can be walked on is positioned in an integrated manner in the outer wall regions (22) cladding the frame (1).

23. Device according to one or more of the preceding claims, **characterized in that** the outer wall region (232) cladding the frame (1) is realized as a protection member (25) that protrudes beyond the outer circular paths of the distributing members (6, 7, 8).

24. Device according to one or more of the preceding claims, **characterized in that** wall members serving as dirt traps (28) are positioned in an integrated manner in the outer wall regions (22) cladding the frame (1) at the front of the device.

25. Device according to one or more of the preceding claims, **characterized in that** the lines leading to the lighting devices (26) are installable in an integrated manner by means of the outer wall regions (22) cladding the frame.

## Revendications

1. Dispositif d'épandage de produits granulaires notamment d'engrais, comportant un châssis de support de charge, un réservoir en forme de trémie porté par le châssis ainsi que des organes de dosage reliés au réservoir pour conduire les produits du réservoir en quantité réglée vers des organes de distribution entraînés, installés sous les organes de dosage,
le réservoir (2) a une zone intérieure (4) en forme de trémie, il reçoit les produits à épandre et débouche sur la trémie de sortie (3) et/ou au niveau des organes de dosage (5),
une zone de paroi (22) extérieure, habille en partie le châssis (1) et le réservoir (2, 24) qu'elle rigidifie,
**caractérisé en ce que**
le châssis (1) comporte une zone d'appui (13) périphérique,
le réservoir (2) comporte une zone d'appui (20) coopérant avec la zone d'appui (13) du châssis (1, 14), et
la zone d'appui (20) du réservoir (2, 24) repose sur la zone d'appui (13) du châssis (1, 14).

2. Dispositif selon la revendication 1,
**caractérisé en ce que**
la zone de paroi (22) d'habillage extérieur, est reliée au réservoir (2, 24).

3. Dispositif selon la revendication 1,
**caractérisé en ce que**
la zone de paroi (22) d'habillage extérieur, est prévue sur le réservoir (2, 24) et/ou le châssis (1).

4. Dispositif selon la revendication 1,
**caractérisé en ce que**
le réservoir (2, 24) et la zone de paroi d'habillage extérieur (22) sont en une seule pièce.

5. Dispositif selon les revendications précédentes,
**caractérisé en ce que**
le réservoir (2, 24) et la zone de paroi d'habillage extérieur (22) sont fabriqués en une seule pièce en matière plastique.

6. Dispositif selon la revendication 1,
**caractérisé en ce que**
la trémie de sortie (3) et l'organe de dosage (5) associé, sont fixés au châssis indépendamment du réservoir (2, 24).

7. Dispositif selon la revendication 6,
**caractérisé en ce que**
les extrémités inférieures (23) du réservoir (2, 24) débouchent de façon à se chevaucher dans la trémie de sortie (3).

8. Dispositif selon la revendication 7,
**caractérisé en ce que**
les extrémités inférieures (23) du réservoir d'alimentation (2, 24) ne sont pas reliées aux trémies de sortie (3).

9. Dispositif selon la revendication 1,
**caractérisé en ce que**
les extrémités inférieures (32) du réservoir d'alimentation (33, 34) sont reliées aux trémies de sortie (29) par une liaison par des brides.

10. Dispositif selon les revendications précédentes,
**caractérisé en ce que**
le châssis (1, 30) et la trémie de sortie (3, 29) sont en métal et le réservoir (2, 24, 33, 34) est en matière plastique.

11. Dispositif selon les revendications précédentes,
**caractérisé en ce que**
la zone de paroi (22) extérieure habillant le châssis (1, 9, 11) comporte des installations de signalisation et d'éclairage (26, 27) intégrées.

12. Dispositif selon les revendications précédentes,
**caractérisé en ce que**
le réservoir (2) et respectivement ses zones de paroi intérieures (24) et extérieures (22), au moins dans les zones latérales et arrière, ont en coupe longitudinale, une section en forme de V ou de U, ouverte vers le bas.

13. Dispositif selon les revendications précédentes,
**caractérisé en ce que**
les parties de paroi du réservoir (2) reliant les zones de paroi intérieures (24) et extérieures (22) sont réalisées sous la forme de surfaces (20) reposant sur le châssis (1, 14).

14. Dispositif selon la revendication 10,
**caractérisé en ce que**
la surface (20) reposant sur le châssis (1, 14) est horizontale.

15. Dispositif selon les revendications précédentes,
**caractérisé en ce qu'**
au moins la trémie de sortie (3) et les organes de dosage (5) sont réalisés en un matériau inoxydable tel que de l'acier inoxydable.

16. Dispositif selon les revendications précédentes,
**caractérisé en ce que**
le châssis (1) comporte une traverse longitudinale (17) dirigée dans la direction de déplacement (16) du dispositif, elle soutient en son milieu le réservoir (2, 24), et
la partie médiane (18) en forme de dièdre du réservoir (2, 24) s'appuie sur la traverse longitudinale (17).

17. Dispositif selon les revendications précédentes,
**caractérisé en ce que**
les trémies de sortie (3) sont respectivement suspendues au châssis (1) par au moins deux entretoises (19), dirigées parallèlement aux parois des trémies du réservoir (2).

18. Dispositif selon les revendications précédentes,
**caractérisé en ce que**
des éléments d'accès (25) en forme d'échelles sont intégrés aux zones de paroi (22) extérieures habillant le châssis (1).

19. Dispositif selon les revendications précédentes,
**caractérisé en ce que**
les zones de paroi (22) extérieures habillant le châssis (1) intègrent au moins un logement analogue à un réceptacle pour recevoir des accessoires, des pièces de rechange ou autres.

20. Dispositif selon la revendication 19,
**caractérisé en ce que**
le logement en forme de réceptacle est fermé par un couvercle.

21. Dispositif selon la revendication 19,
**caractérisé en ce que**
le fond du logement en forme de réceptacle, est installé en biais dans le sens descendant vers l'intérieur.

22. Dispositif selon les revendications précédentes,
**caractérisé en ce que**
la zone de paroi extérieure (22) habillant le châssis (1), intègre au moins une plateforme ou un élément d'accès.

23. Dispositif selon les revendications précédentes,
**caractérisé en ce que**
la zone de paroi (22) extérieure habillant le châssis (1) est réalisée sous la forme d'un élément de protection (25) dépassant les trajectoires extérieures décrites par les éléments distributeurs (6, 7, 8).

24. Dispositif selon les revendications précédentes,
**caractérisé en ce que**
dans les zones de paroi (22) extérieures habillant le châssis (1), les éléments de paroi servant de garde-boue (28) sont intégrés sur le côté avant du dispositif.

25. Dispositif selon les revendications précédentes,
**caractérisé en ce que**
les conduites aboutissant aux installations d'éclairage (26) sont intégrées dans les zones de paroi (22) habillant l'extérieur du châssis.
